# FASCICULE DE BREVET EUROPEEN

(11) **EP 3 877 821 B1**
(45) Date de publication et mention de la délivrance du brevet: **31.12.2025**
(21) Numéro de dépôt: 19804647.6
(22) Date de dépôt: 05.11.2019
(51) Int. Cl.: B60W 40/09, B60W 50/00

(54) **PROCÉDÉ DE DÉTERMINATION D'UNE TRAJECTOIRE D'UN VÉHICULE AUTONOME**
VERFAHREN ZUR BESTIMMUNG EINER TRAJEKTORIE EINES AUTONOMEN FAHRZEUGS
METHOD FOR DETERMINING A TRAJECTORY OF AN AUTONOMOUS VEHICLE

(30) Priorité: 05.11.2018 FR 1860171
(43) Date de publication de la demande: 15.09.2021
(73) Titulaire: Ampere SAS, 92100 Boulogne-Billancourt (FR)
(72) Inventeur: MILANES, Vicente, 92100 Boulogne-Billancourt (FR); GONZALEZ BAUTISTA, David, 78210 Saint Cyr l'école (FR)
(74) Mandataire: Renault Group
(86) Numéro de dépôt international: PCT/EP2019/080233
(87) Numéro de publication internationale: WO 2020/094639

(56) Documents cités:
- JP-A- 2009 227 196
- JP-A- 2016 194 816
- US-A1- 2017 008 522
- US-A1- 2017 137 033

## Description

### Domaine technique de l'invention

La présente invention concerne un procédé de détermination d'une trajectoire d'un véhicule autonome. L'invention concerne également un système, produit programme et support d'enregistrement correspondants.

### État de la technique

Les véhicules automobiles dits autonomes, sont des véhicules aptes à contrôler leur trajectoire sans l'aide d'un conducteur. A cet effet, les véhicules autonomes comprennent différents capteurs reliés à une unité de commande électronique. L'unité de commande électronique calcule grâce aux informations délivrées par ces capteurs une trajectoire « théorique », ou autrement dit « optimale ». Puis l'unité de commande électronique émet des ordres de commande vers un système de direction de manière à contrôler le braquage des roues directrices du véhicule afin que le véhicule suive la trajectoire théorique. Le conducteur du véhicule ne doit plus manipuler le volant mais simplement contrôler que la trajectoire du véhicule est correcte. Toutefois la trajectoire suivie par un véhicule autonome est souvent éloignée de celle qu'aurait suivie le conducteur s'il avait contrôlé lui-même le véhicule. Cette différence de comportement peut surprendre ou susciter l'inquiétude du conducteur et de ses passagers et/ou elle peut générer de l'inconfort en faisant subir au véhicule des accélérations latérales imprévisibles.

On connaît grâce à la publication US 2015/0166069 A1 un procédé de détermination d'une commande d'un véhicule comprenant une étape d'enregistrement des préférences d'un conducteur, une étape d'identification d'un scénario prédéterminé, puis l'application d'une commande par défaut en fonction des préférences et du scénario prédéterminé. Toutefois, un tel système de conduite autonome ne permet pas d'atteindre un confort optimal pour le conducteur et de ses passagers. De plus, la confiance du conducteur envers le système de direction autonome, autrement dit l'acceptabilité d'un tel système de direction autonome, demeure limitée. JP 2009/227196 A et US 2017/0137033 A1 montrent également des systèmes de contrôle des véhicules.

### Objet de l'invention

Le but de l'invention est de fournir un procédé de détermination d'une trajectoire d'un véhicule autonome remédiant aux inconvénients ci-dessus et améliorant les procédés de connus de l'art antérieur. En particulier, l'invention permet de réaliser un procédé de détermination d'une trajectoire d'un véhicule autonome augmentant le confort pour le conducteur et ses passagers. Le procédé selon l'invention vise à procurer une confiance optimale dans le système de direction du véhicule autonome.

L'invention est définie par les revendications indépendantes.

Le calcul de la première trajectoire théorique et/ou de la deuxième trajectoire théorique et/ou de la trajectoire personnalisée peut comprendre le calcul d'un angle de braquage de roues directrices du véhicule et/ou le calcul d'un lacet du véhicule. La mesure de la trajectoire effectivement suivie peut comprendre la mesure d'un angle de braquage de roues directrices du véhicule et/ou la mesure d'un lacet du véhicule.

Selon l'invention, le calcul du facteur de correction comprend une comparaison du lacet du véhicule suivant la première trajectoire théorique avec le lacet du véhicule mesuré lors de la deuxième étape.

Le calcul de la deuxième trajectoire théorique peut comprendre le calcul d'un lacet du véhicule, et la cinquième étape peut comprendre une multiplication du lacet du véhicule lors de la deuxième trajectoire théorique par le facteur de correction.

Le procédé de détermination peut comprendre une sixième étape de contrôle de la trajectoire personnalisée du véhicule, la sixième étape comprenant :
- une première sous-étape de calcul d'une première trajectoire extrême du véhicule et, éventuellement d'une deuxième trajectoire extrême du véhicule, puis
- une deuxième sous-étape de comparaison de la trajectoire personnalisée du véhicule avec la première trajectoire extrême du véhicule et, éventuellement, avec la deuxième trajectoire extrême du véhicule.

Le procédé de détermination peut comprendre une huitième étape de calcul d'une commande de braquage des roues directrices du véhicule de sorte à ce que le véhicule suive la trajectoire personnalisée.

L'invention se rapporte également à un système de direction pour un véhicule autonome, le système de direction comprenant des moyens matériels et/ou logiciels mettant en œuvre un procédé tel que défini précédemment, notamment des éléments matériels et/ou logiciels conçus pour mettre en œuvre un procédé tel que défini précédemment.

Le système de direction peut comprendre :
- un capteur de lacet, et/ou
- un capteur de braquage des roues directrices, et/ou
- un capteur de vitesse du véhicule, et/ou
- une caméra, et/ou
- un capteur GPS.

L'invention se rapporte également à un véhicule automobile, comprenant un système de direction tel que défini précédemment.

L'invention se rapporte également à un produit programme pour calculateur comprenant des instructions de code de programme enregistrées sur un support lisible par une unité de commande électronique pour mettre en œuvre les étapes d'un procédé tel que défini précédemment lorsque ledit programme fonctionne sur une unité de commande électronique. L'invention se rapporte également à un produit programme pour une unité de commande électronique téléchargeable depuis un réseau de communication et/ou enregistré sur un support de données lisible par une unité de commande électronique et/ou exécutable par une unité de commande électronique, le produit programme comprenant des instructions qui, lorsque le programme est exécuté par une unité de commande électronique, conduisent celle-ci à mettre en œuvre un procédé tel que défini précédemment.

L'invention se rapporte également à un support d'enregistrement de données, lisible par une unité de commande électronique, sur lequel est enregistré un programme pour une unité de commande électronique comprenant des instructions de code de programme de mise en œuvre d'un procédé tel que défini précédemment. L'invention se rapporte également à un support d'enregistrement lisible par une unité de commande électronique comprenant des instructions qui, lorsqu'elles sont exécutées par une unité de commande électronique, conduisent celle-ci à mettre en œuvre un procédé tel que défini précédemment.

### Description sommaire des dessins

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un véhicule automobile selon un mode de réalisation de l'invention.
La figure 2 est un ordinogramme représentant les étapes du procédé de détermination selon un mode de réalisation de l'invention.
La figure 3 est une vue de dessus d'un parcours automobile.
Les figures 4 et 5 sont des vues schématiques de dessus d'un véhicule et de sa trajectoire sur une chaussée.
Les figures 6 et 7 sont des graphiques représentant le lacet d'un véhicule le long d'un parcours
La figure 8 est une vue de dessus d'un parcours automobile.
La figure 9 est un graphique représentant un écart latéral d'un véhicule le long d'un parcours.
La figure 10 est un graphique représentant l'angle de braquage des roues directrices d'un véhicule le long d'un parcours.
La figure 11 est un synoptique d'un procédé de détermination selon un mode de réalisation de l'invention.

### Description d'un mode de réalisation

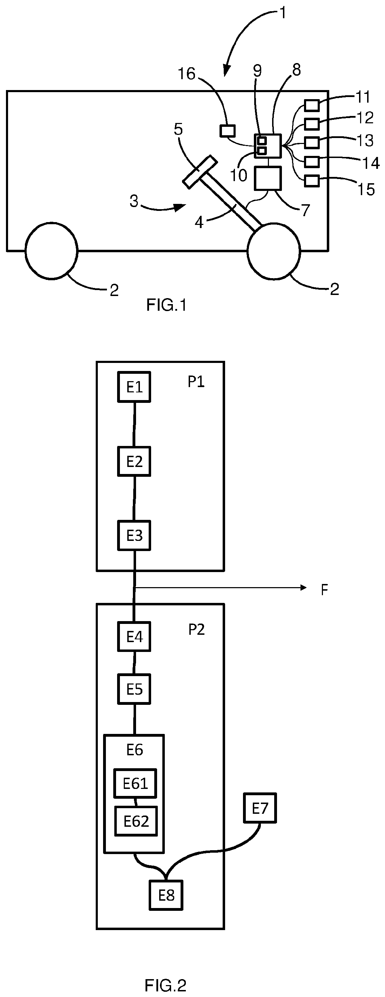

La figure 1 illustre schématiquement un véhicule 1 automobile selon un mode de réalisation de l'invention. Le véhicule 1 comprend quatre roues 2, dont deux roues, à l'avant du véhicule, sont des roues directrices, c'est-à-dire orientables de manière à diriger le véhicule. En variante, le véhicule 1 pourrait comprendre un nombre de roues différents, par exemple trois roues ou six roues, et/ou posséder plus ou moins de roues directrices. Le véhicule 1 peut être notamment un véhicule particulier, un véhicule utilitaire, un camion ou un bus. Le véhicule 1 comprend de manière classique un système de direction 3 comprenant une colonne de direction 4 et un volant 5 fixé à l'extrémité de la colonne de direction 4. Le système de direction comprend en outre un actionneur 7 apte à interagir avec la colonne de direction 4 ou directement avec les roues directrices pour orienter les roues directrices du véhicule 1. Ainsi le véhicule peut être utilisé en tant que véhicule autonome, c'est-à-dire comme un véhicule apte à se diriger sur une chaussée sans intervention d'un conducteur. Le système de direction 3 comprend également une unité de commande électronique 8 équipée d'un microprocesseur 9 et d'une mémoire 10. L'unité de commande électronique 8 est apte à émettre des ordres de commande vers l'actionneur 7 pour que ce dernier oriente les roues directrices du véhicule 1.

Différents capteurs du véhicule 1 sont connectés à l'unité de commande électronique 8 parmi lesquels : un capteur de lacet 11, un capteur de braquage des roues directrices 12, un capteur de vitesse 13 du véhicule, une caméra 14, un capteur GPS 15. Ces capteurs peuvent être intégrés au système de direction 3 et être connectés par exemple par une liaison filaire ou une liaison sans fil à l'unité de commande électronique 8. Ces capteurs peuvent être également des capteurs utilisés par d'autres systèmes du véhicule. Ils peuvent être reliés à l'unité de commande électronique 8 par l'intermédiaire d'un bus de données de type CAN (« controlled Area Network »).

Le capteur de lacet 11 est un capteur de la vitesse angulaire du véhicule autour d'un axe perpendiculaire au plan sur lequel repose le véhicule. Lorsque le véhicule repose sur un sol horizontal, le capteur de lacet 11 est donc un capteur de la vitesse angulaire du véhicule autour d'un axe vertical. Dans l'ensemble de la présente demande, le terme « lacet » désigne la vitesse de lacet, c'est donc une valeur physique pouvant s'exprimer en radians par seconde. Le capteur de lacet 11 peut être connecté à une unité électronique de contrôle de la trajectoire du véhicule, également dénommé bloc « ESP ».

Le capteur de braquage des roues directrices 12 est un capteur apte à mesurer la position angulaire, ou autrement dit l'orientation, des roues directrices 12. De manière classique, ce capteur peut être un capteur d'angle au volant, autrement dit un capteur de la position angulaire du volant 5 ou de la colonne de direction 4 fixée au volant. Ce capteur peut être relié au volant 5 ou à la colonne de direction 4 à condition que le volant ou la colonne de direction soit elle-même couplée aux roues directrices, c'est-à-dire que leurs positions angulaires soient corrélées en toute circonstance. Si l'orientation du volant 5 et/ou de la colonne de direction 4 peuvent être décorrélées du braquage des roues directrices, notamment lorsque le véhicule fonctionne de manière autonome, on utilisera un capteur différent pour mesurer la position angulaire des roues directrices. Le capteur de braquage des roues directrices 12 peut également être connecté à l'unité électronique de contrôle de la trajectoire du véhicule.

Le capteur de vitesse 13 peut être constitué d'un ensemble de capteurs intégrés à chacune des roues 2 et mesurant leur vitesse de rotation. Le capteur de vitesse 13 peut également être connecté à l'unité électronique de contrôle de la trajectoire du véhicule.

La caméra 14 est apte à détecter l'environnement devant le véhicule. Notamment elle peut détecter un marquage sur la chaussée comme par exemple la présence et la position d'une ligne de délimitation ou bande de délimitation, continue ou discontinue, généralement de couleur blanche ou jaune, servant à délimiter les bords d'une chaussée ou des voies sur la chaussée. Avantageusement, la caméra 14 peut également détecter d'autres indications utiles au bon positionnement du véhicule sur la chaussée, comme par exemple des flèches marquées sur la chaussée, et/ou des panneaux, et/ou des obstacles et/ou d'autres véhicules occupant la chaussée.

Le capteur GPS 15 (« Global Positioning System ») fournit des informations permettant de calculer des coordonnées GPS de la position du véhicule. La position du véhicule est suffisamment précise pour pouvoir positionner le véhicule sur la chaussée.

Enfin, le système de direction 3 comprend également un commutateur 16, avantageusement directement accessible par le conducteur. Le commutateur 16 peut prendre trois positions distinctes. Une première position correspond à un premier mode de fonctionnement M1 du véhicule dans lequel le conducteur contrôle manuellement la trajectoire du véhicule. Dans ce premier mode de fonctionnement, le conducteur contrôle lui-même la direction du véhicule en actionnant le volant. Un mécanisme de direction assistée peut éventuellement réduire l'effort nécessaire pour faire tourner les roues, toutefois le braquage des roues résulte uniquement de la volonté du conducteur. En complément, la vitesse du véhicule peut être ou non contrôlée par un régulateur de vitesse ou par un limiteur de vitesse.

Une deuxième position du commutateur 16 correspond à un deuxième mode de fonctionnement M2 du véhicule dans lequel la trajectoire du véhicule 1 est définie de manière complètement autonome par l'unité de commande électronique 8. Dans ce deuxième mode de fonctionnement, le véhicule 1 suit une trajectoire théorique.

Une troisième position du commutateur 16 correspond à un troisième mode de fonctionnement M3 du véhicule dans lequel le véhicule 1 suit une trajectoire personnalisée définie selon un mode de réalisation de l'invention.

Nous allons à présent détailler le procédé permettant de déterminer cette trajectoire personnalisée en référence à la figure 2 illustrant un procédé comprenant huit étapes E1 à E8. Les trois premières étapes E1 à E3 sont accomplies lors d'une première phase P1 dans laquelle la trajectoire du véhicule est contrôlée manuellement par le conducteur. La première phase P1 est une phase d'initialisation, autrement dit de paramétrage ou d'apprentissage, du procédé de détermination selon l'invention. Les quatre étapes E4, E5, E6 et E8 sont accomplies lors d'une deuxième phase P2 dans laquelle la trajectoire du véhicule est contrôlée de manière autonome. La septième étape E7 peut être accomplie à tout moment avant la huitième étape E8.

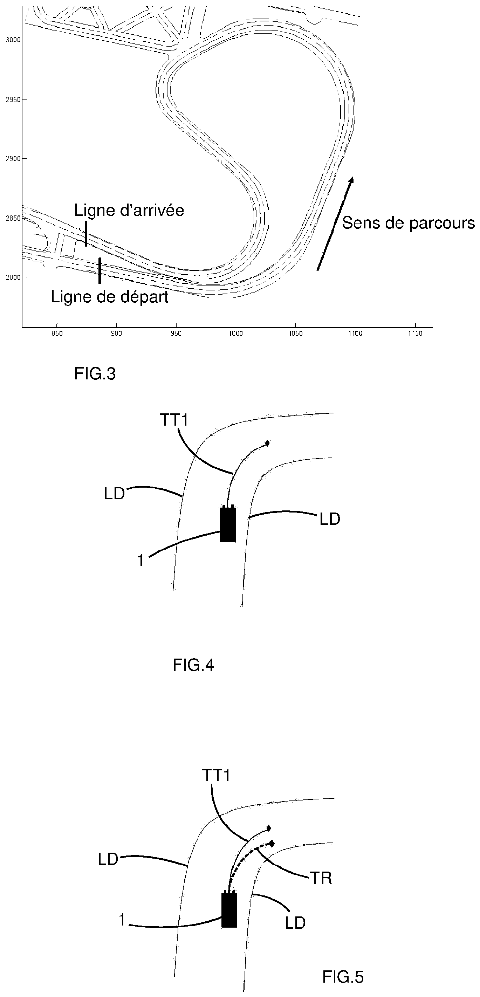

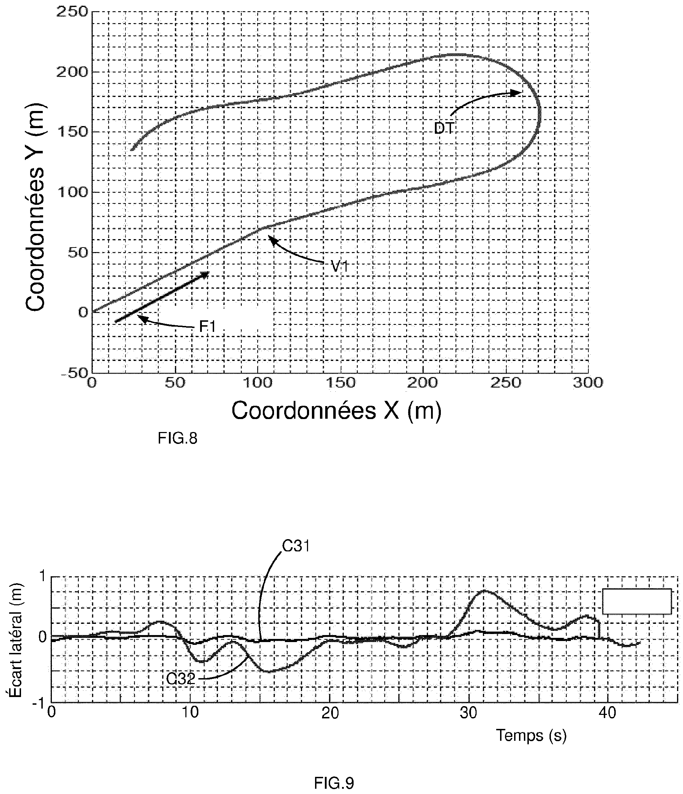

La première étape E1 est une étape de calcul d'une première trajectoire théorique du véhicule le long d'un premier parcours. Ce premier parcours peut être quelconque. Par exemple, le premier parcours peut être le parcours illustré sur la figure 3 ou sur la figure 8. Le parcours illustré sur la figure 3 comprend une ligne de départ illustrée par « Starting point », une ligne d'arrivée illustrée par « Ending point », et est parcouru dans le sens indiqué par la flèche « Driving direction ». Cette première étape peut être réalisée au fur et à mesure que le véhicule suit le premier parcours tout en étant conduit de manière manuelle. Au cours de cette étape, le véhicule est contrôlé manuellement par le conducteur. L'unité de commande électronique n'émet donc pas d'ordre de commande vers l'actionneur 7 pour que le véhicule suive la première trajectoire théorique. La première trajectoire théorique peut être définie notamment à l'aide des capteurs 11, 12, 13, 14 et 15 du véhicule et en fonction de la forme de la chaussée sur laquelle circule le véhicule. Elle est définie de manière complètement objective, autrement dit de manière complètement indépendante du style de conduite du conducteur. Par exemple, la première trajectoire théorique, que l'on pourrait également dénommer trajectoire « idéale » ou trajectoire « optimale », peut être une trajectoire positionnant le véhicule à équidistance des bords droit et gauche d'une chaussée. En référence à la figure 4, la première trajectoire théorique TT1 peut également être une trajectoire positionnant le véhicule 1 à équidistance de lignes de délimitation LD marquées sur la chaussée sur le côté droit et sur le côté gauche de la chaussée. La première trajectoire théorique peut également être une trajectoire maintenant le véhicule à une distance donnée d'une unique ligne de délimitation. Quel que soit le mode de calcul retenu pour la définition de la trajectoire théorique, le microprocesseur 9 de l'unité de commande électronique 8 exécute un algorithme basé uniquement sur les informations délivrées par les capteurs 11, 12, 13, 14 et 15 du véhicule. La première trajectoire théorique ne tient pas compte de la manière dont le conducteur conduit lorsqu'il utilise le véhicule dans le premier mode de fonctionnement M1, c'est-à-dire dans le mode manuel. Cette première trajectoire théorique est enregistrée dans la mémoire 10 de l'unité de commande électronique 8. En variante, la première trajectoire théorique pourrait également être calculée par un ordinateur non embarqué dans le véhicule et/ou être disponible dans une base de donnée non embarquée dans le véhicule puis être enregistrée comme une donnée numérique dans la mémoire 10 de l'unité de commande électronique 8. En remarque, le lacet théorique, c'est-à-dire le lacet du véhicule suivant le premier parcours théorique à la même vitesse, peut être calculé en connaissant la première trajectoire théorique et la vitesse du véhicule.

Dans une deuxième étape E2, on mesure la trajectoire effectivement suivie par le véhicule le long du premier parcours. La trajectoire effectivement suivie par le véhicule, autrement dit la trajectoire réelle, est indépendante de la première trajectoire théorique. En référence à un exemple illustré sur la figure 5, on observe que la trajectoire réelle TR se rapproche davantage de l'intérieur du virage que la première trajectoire théorique TT1. Cette trajectoire réelle est également enregistrée dans la mémoire 10 de l'unité de commande électronique 8.

Selon une variante de réalisation du procédé selon l'invention, la première trajectoire théorique pourrait être enregistrée alors que le véhicule suit le premier parcours tout en étant contrôlé de manière autonome selon le deuxième mode de fonctionnement M2. Puis la trajectoire réelle serait mesurée à l'occasion d'un deuxième passage du véhicule sur le premier parcours tout en étant contrôlé manuellement.

Dans une troisième étape E3, on calcule un facteur de correction F, autrement dit un taux d'erreur, en comparant la première trajectoire théorique, calculée lors de la première étape E1, avec la trajectoire effectivement suivie par le véhicule, enregistrée lors de la deuxième étape E2. Dans un exemple hors du champ de protection de l'invention, ce facteur peut être par exemple une valeur fixe, ou une valeur dépendante de l'angle de braquage de roues directrices du véhicule, ou une valeur dépendante de la vitesse du véhicule, ou encore une valeur dépendante de la distance séparant la trajectoire réelle de la première trajectoire théorique. Selon l'invention, le facteur est une valeur dépendante du lacet du véhicule.

Notamment, le facteur de correction F peut être calculé en comparant le lacet du véhicule contrôlé de manière manuelle avec le lacet théorique, c'est-à-dire le lacet du véhicule suivant le premier parcours théorique à la même vitesse. En variante, d'autres méthodes peuvent être envisagées pour calculer le facteur de correction F.

Dans la quatrième étape E4, on calcule une deuxième trajectoire théorique le long d'un deuxième parcours. Le deuxième parcours peut être différent ou identique au premier parcours. La deuxième trajectoire théorique est calculée selon le même principe que la première trajectoire théorique. Elle peut être calculée conformément à l'une des méthodes de calcul décrites pour le calcul de la première trajectoire théorique lors de la première étape E1. Si le premier parcours est identique au deuxième parcours, alors la première trajectoire théorique est logiquement identique à la deuxième trajectoire théorique.

Dans la cinquième étape E5, on calcule une trajectoire personnalisée du véhicule. Ce calcul est basé sur la deuxième trajectoire théorique calculée lors de la quatrième étape et sur facteur de correction F calculé lors de la quatrième étape. Ce calcul peut comprendre par exemple une multiplication du lacet du véhicule si celui-ci devait suivre la deuxième trajectoire théorique par le facteur de correction F.

La première et/ou la deuxième trajectoire théorique, et/ou la trajectoire effectivement suivie par le véhicule, et/ou la trajectoire personnalisée peuvent être enregistrées sous différentes formes dans la mémoire 10. Par exemple, ces trajectoires peuvent être enregistrées sous la forme d'un angle de braquage de roues directrices du véhicule en fonction du temps et/ou en fonction d'une distance parcourue par le véhicule. En variante ou en complément, ces trajectoires peuvent également être enregistrées sous la forme d'un lacet du véhicule en fonction d'un temps écoulé et/ou en fonction d'une distance parcourue par le véhicule. Enfin, en variante ou en complément, les trajectoires peuvent également être enregistrées sous la forme d'une distance par rapport à une ligne directrice marquée sur la chaussée ou alors sous la forme d'une trace GPS comprenant un ensemble de coordonnées GPS.

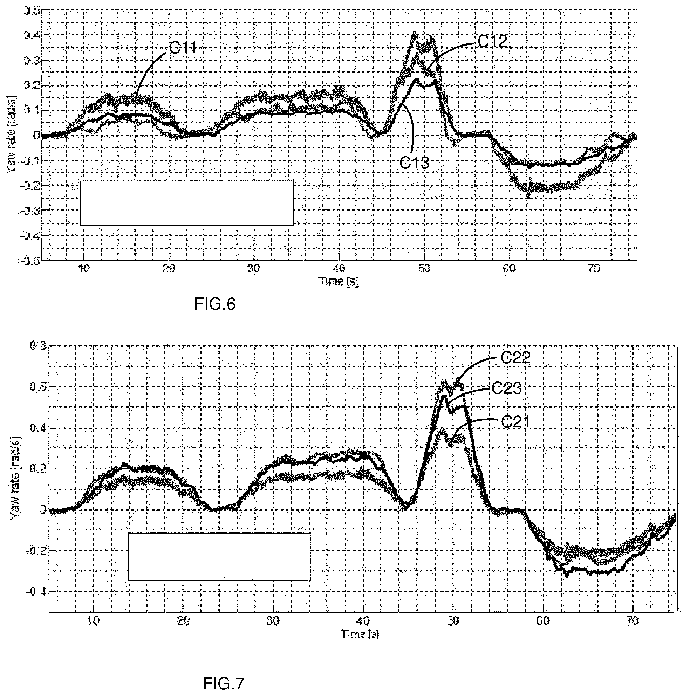

Le graphique de la figure 6 illustre plus en détail un premier exemple du procédé de détermination de la trajectoire personnalisée du véhicule. Dans cet exemple, le premier parcours est identique au deuxième parcours et correspond au parcours illustré sur la figure 3. Chaque trajectoire est caractérisée par une courbe du lacet du véhicule en fonction du temps : le lacet du véhicule, exprimé en radians par seconde, est affiché sur l'axe des ordonnées. Le temps, exprimé en secondes, est affiché sur l'axe des abscisses. La durée nécessaire pour réaliser le premier parcours est donc d'environ 75 secondes.

Une première courbe C11 représente le lacet du véhicule en fonction du temps lorsque le véhicule suit la première trajectoire théorique. Cette première courbe C11 est donc obtenue à l'issue de la première étape E1. Une deuxième courbe C12 représente le lacet du véhicule en fonction du temps lorsque le véhicule est dirigé manuellement par le conducteur. Cette deuxième courbe C12 est donc obtenue à l'issue de la deuxième étape E2. Lors de cette étape, le conducteur a suivi une trajectoire globalement plus à l'extérieur des virages que pour la première trajectoire théorique de sorte à abaisser le lacet du véhicule. Le facteur de correction F peut être calculé par exemple en divisant une moyenne de la deuxième courbe par une moyenne de la première courbe. Ensuite on calcule la deuxième trajectoire théorique : le deuxième parcours étant dans cet exemple identique au premier parcours, la deuxième trajectoire théorique est identique à la première trajectoire théorique et est donc représentée par la première courbe C11. Enfin, on calcule la trajectoire personnalisée du véhicule en multipliant la première courbe C11 par le facteur de correction F. On obtient ainsi une troisième courbe C13 représentant la trajectoire personnalisée du véhicule sur le deuxième parcours. On constate que la trajectoire personnalisée permet d'obtenir un lacet globalement plus faible que le lacet de la première trajectoire théorique ce qui correspond bien au style de conduite du conducteur lors de la deuxième étape E2, c'est-à-dire un style de conduite plutôt prudent.

Le graphique de la figure 7 illustre un deuxième exemple du procédé de détermination de la trajectoire personnalisée du véhicule. Le premier parcours et le deuxième parcours correspondent également au parcours de la figure 3. Le procédé de détermination est identique à celui présenté précédemment en référence à la figure 6. Par conséquent la première courbe C21 correspondant à la première trajectoire théorique est identique à la première courbe C11 vue précédemment. Par contre, cette fois, alors que le véhicule était contrôlé manuellement, le conducteur a suivi une trajectoire globalement plus à l'intérieur des virages que pour la première trajectoire théorique, de sorte à augmenter le lacet du véhicule. La deuxième courbe C22 obtenue à l'issue de la deuxième étape E2 présente donc un lacet globalement plus élevé que le lacet de la première trajectoire théorique. En appliquant la même méthode de calcul que vu à l'exemple précédent, on obtient la troisième courbe C23 représentant une nouvelle trajectoire personnalisée du véhicule sur le deuxième parcours. On constate que cette nouvelle trajectoire personnalisée produit un lacet globalement plus élevé que le lacet de la première trajectoire théorique ce qui correspond bien au style de conduite du conducteur lors de la deuxième étape E2, c'est-à-dire un style de conduite plutôt sportif.

Un troisième exemple d'utilisation du procédé de détermination selon l'invention est illustré par les figures 8, 9 et 10. La figure 8 illustre en vue de dessus un parcours matérialisé par une ligne directrice LD marquée au sol. Ce parcours comprend un léger virage V1 vers la droite suivi d'un demi-tour DT vers la gauche et est parcouru dans le sens de la flèche F1. La figure 9 est un graphique représentant l'écart latéral (exprimé en mètres) du véhicule par rapport à la ligne directrice LD en fonction du temps nécessaire pour suivre le parcours de la figure 8. On représente par une première courbe C31 l'écart latéral obtenu lorsque le véhicule est contrôlé de manière autonome, de sorte à suivre une trajectoire théorique le long de la ligne directrice LD. On constate que le véhicule ne s'écarte pas de plus de quelques centimètres, voire de quelques dizaines de centimètres de la ligne directrice LD. On représente par une deuxième courbe C32 l'écart latéral obtenu lorsque le véhicule est contrôlé de manière manuelle. On constate que le véhicule s'écarte de plusieurs dizaines de centimètres, voire d'un mètre, de part et d'autre de la ligne directrice LD. En remarque, un tel écartement de la ligne directrice ne crée aucun risque pour la sécurité du conducteur car la chaussée est suffisamment large. Ces écarts par rapport à la ligne directrice LD expriment le style de conduite du conducteur.

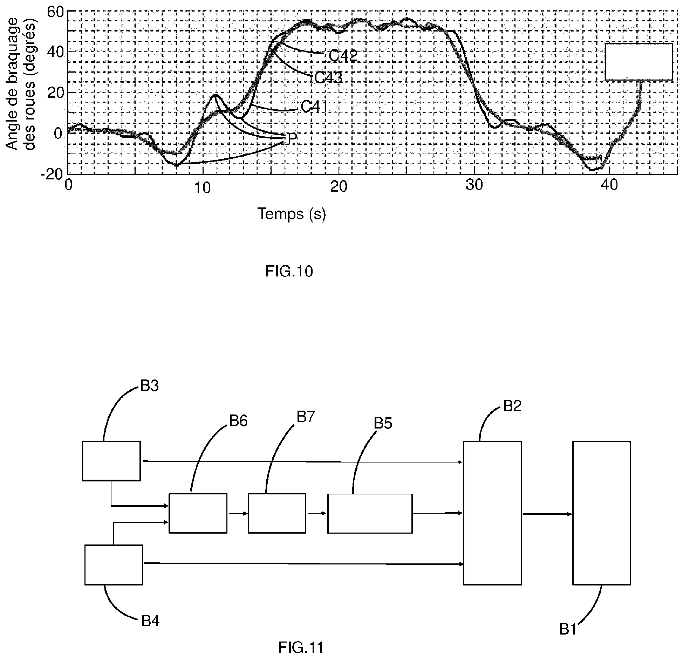

La figure 10 est un graphique représentant le braquage des roues directrices en fonction du temps nécessaire pour suivre le parcours de la figure 8. Une première courbe C41 représente le braquage des roues directrices lorsque le véhicule est contrôlé de manière autonome, de sorte à suivre une trajectoire théorique. Cette courbe comprend plusieurs points d'inflexion P correspondant à des variations du braquage des roues directrices. Ces points d'inflexion P peuvent générer des accélérations latérales et/ou des secousses ressenties par le conducteur et/ou par ses passagers. Une deuxième courbe C42 représente le braquage des roues directrices lorsque le véhicule est contrôlé de manière manuelle. Cette deuxième courbe ne comprend pas de point d'inflexion ou bien ces points d'inflexion sont nettement moins marqués que pour la première courbe. Comparativement à la trajectoire obtenue par un contrôle autonome du véhicule et telle que représentée par la courbe C41, la trajectoire obtenue par un contrôle manuel du véhicule s'écarte davantage de la ligne directrice LD mais produit également des accélérations latérales et/ou des secousses plus faibles. Une troisième courbe C43 représente le braquage des roues directrices lorsque le véhicule suit une trajectoire personnalisée selon l'invention. Cette troisième courbe est quasiment confondue avec la deuxième courbe. On parvient donc à reproduire un comportement du véhicule, autrement dit un style de conduite, très proche du comportement ou du style de conduite d'un conducteur contrôlant lui-même la trajectoire du véhicule.

Dans une sixième étape E6, on contrôle la trajectoire personnalisée du véhicule. Ce contrôle a notamment pour but de vérifier que les dimensions de la chaussée permettent bien de suivre la trajectoire personnalisée, ou autrement dit que la trajectoire du véhicule peut s'écarter de la trajectoire théorique. Cette sixième étape comprend une première sous-étape E61 de calcul d'une première trajectoire extrême du véhicule et d'une deuxième trajectoire extrême du véhicule. La première trajectoire extrême peut correspondre à la trajectoire la plus à l'intérieur d'un virage sans que le véhicule sorte de la chaussée et sans que le véhicule perde son adhérence. La deuxième trajectoire extrême peut correspondre à la trajectoire la plus à l'extérieur d'un virage sans que le véhicule sorte de la chaussée et sans que le véhicule perde son adhérence. Ces trajectoires peuvent être déterminées à l'aide de capteurs du véhicule tels que le capteur de lacet 11, le capteur de braquage des roues directrices 12, le capteur de vitesse 13, la caméra 14 et le capteur GPS 15, ainsi qu'éventuellement à l'aide d'une unité électronique de contrôle de la trajectoire du véhicule.

Dans une deuxième sous-étape E62, on compare la trajectoire personnalisée du véhicule avec la première trajectoire extrême du véhicule et avec la deuxième trajectoire extrême du véhicule. Si la trajectoire personnalisée est contenue entre les deux trajectoires extrêmes alors elle peut faire l'objet d'un ordre de commande de braquage des roues directrices. Si la trajectoire personnalisée n'est pas contenue entre les deux trajectoires extrêmes alors c'est la trajectoire théorique qui fait l'objet d'un ordre de commande de braquage des roues directrices. Concrètement, on peut par exemple associer aux deux trajectoires extrêmes des valeurs de lacets extrêmes. Une valeur de lacet extrême maximale correspond à la trajectoire la plus à l'intérieur d'un virage. Une valeur de lacet extrême minimale correspond à la trajectoire la plus à l'extérieur d'un virage. On vérifie ensuite que le lacet de la trajectoire personnalisé est bien contenu entre ces deux valeurs extrêmes.

En variante cette sixième étape E6 pourrait être omise par exemple si les chaussées sur lesquelles circule le véhicule ne présentent pas de risque de sortie de piste ou de perte d'adhérence ou bien par exemple si le facteur de correction F est défini de sorte à n'induire que de faibles modifications de la trajectoire théorique. Le contrôle pourrait également être fait par rapport à une unique trajectoire extrême, la trajectoire la plus à l'intérieur d'un virage ou la trajectoire la plus à l'extérieur d'un virage.

Dans la septième étape E7, on fait un choix d'un mode de fonctionnement du véhicule parmi les deuxième et troisième modes de fonctionnement M2, M3, ou parmi les trois modes de fonctionnement M1, M2, M3 précédemment décrits. A cet effet, le conducteur peut actionner le commutateur 16. Le deuxième mode de fonctionnement M2 peut n'être rendu accessible qu'après une phase d'initialisation P1. La septième étape E7 peut ne pas faire partie du procédé de détermination de la trajectoire personnalisée mais plutôt d'un procédé de fonctionnement plus large englobant le procédé de détermination de la trajectoire personnalisée qui ne comprendrait alors que les étapes E1 à E6 et E8. L'étape E7 peut être réalisée avant les étapes E1 à E6. Ainsi, si à l'issue de la septième étape E7 le conducteur choisit le premier mode de fonctionnement ou le deuxième mode de fonctionnement, les étapes E1 à E6 ne sont pas nécessairement réalisées. Le choix du mode de fonctionnement peut être réalisé au cours de la deuxième phase de fonctionnement P2 pour basculer du deuxième mode de fonctionnement M2 vers le troisième mode de fonctionnement M3 ou inversement.

Dans la huitième étape E8, on calcule une commande de braquage des roues directrices du véhicule. L'unité de commande électronique 8 émet vers l'actionneur 7 une commande de braquage des roues directrices en fonction de la position du commutateur 16 et en fonction du résultat du contrôle de la trajectoire personnalisée réalisé lors de la sixième étape E6. Si le commutateur est dans sa première position, le véhicule est contrôlé manuellement. Si le commutateur 16 est dans sa deuxième position, le véhicule est contrôlé de manière autonome et suit la trajectoire théorique. Si le commutateur est dans sa troisième position et que le contrôle de la trajectoire personnalisée réalisé lors de la sixième étape E6 le permet, alors le véhicule suit la trajectoire personnalisée.

La figure 11 synthétise en d'autres termes le procédé de détermination précédemment décrit. En parcourant ce diagramme de la droite vers la gauche (c'est-à-dire de la fin du procédé vers le début du procédé), un bloc B1 met en œuvre la huitième étape E8 c'est-à-dire qu'il génère une commande de braquage des roues directrices en fonction d'une commande de trajectoire reçue en amont. En amont du bloc B1, un bloc B2 symbolise la sixième étape E6, c'est-à-dire le choix d'un mode de fonctionnement du véhicule parmi les trois modes de fonctionnement M1, M2, M3 précédemment décrits. Trois commandes de trajectoire différentes peuvent donc parvenir au bloc B2. La première commande de trajectoire, symbolisée par le bloc B3, correspond à une commande de trajectoire manuelle, c'est-à-dire issue de l'action du conducteur sur le volant du véhicule. La deuxième commande de trajectoire, symbolisée par le bloc B4, correspond à une commande de trajectoire théorique. La troisième commande de trajectoire, symbolisée par le bloc B5, correspond à une commande de trajectoire personnalisée. Comme expliqué précédemment la commande de trajectoire personnalisée est obtenue en combinant la commande de trajectoire manuelle avec la commande de trajectoire théorique. Cette combinaison est réalisée par le bloc B6, dit « module d'apprentissage ». Le bloc B6 met notamment en œuvre la troisième étape E3 dans laquelle le facteur de correction F est calculé grâce à une comparaison d'une commande de trajectoire manuelle et d'une commande de trajectoire théorique. Ensuite le bloc B7 met en œuvre la sixième étape E6 dans laquelle la trajectoire personnalisée est contrôlée.

Grâce à l'invention, on dispose d'un procédé permettant d'adapter la trajectoire d'un véhicule autonome en fonction des habitudes et/ou du style de conduite d'un conducteur. La commande de trajectoire personnalisée est une combinaison d'une trajectoire optimale théorique avec les habitudes ou le style de conduite d'un conducteur. Le conducteur n'a pas besoin de paramétrer lui-même le style de conduite souhaité puisqu'il lui suffit d'utiliser au moins une fois son véhicule en mode manuel pour définir son style de conduite. La trajectoire suivie par le véhicule est ainsi mieux prévisible par le conducteur et celui-ci est donc plus enclin à faire confiance au système de direction du véhicule autonome.

La première phase P1, dite phase d'initialisation, peut être répété aussi souvent que nécessaire de manière à affiner le facteur de correction ou pour le faire évoluer en fonction de nouvelles habitudes de conduite du conducteur. L'unité de commande électronique peut enregistrer différents facteurs de correction associés à différents conducteurs du véhicule. Ainsi, après une identification du conducteur d'un véhicule, le facteur de correction qui lui est associé peut être utilisé. Le facteur de correction peut également être choisi manuellement parmi plusieurs facteurs de correction préalablement enregistrés. Il peut également être déterminé automatiquement en fonction non seulement du conducteur mais également des passagers présents dans le véhicule.

## Revendications

1. Procédé de détermination d'une trajectoire d'un véhicule (1) apte à contrôler sa trajectoire de manière autonome, le procédé comprenant une première phase (P1) se déroulant alors que la trajectoire du véhicule est contrôlée manuellement par un conducteur, la première phase (P1) comprenant :
- une première étape (E1) de calcul d'une première trajectoire théorique du véhicule,
- une deuxième étape (E2) de mesure d'une trajectoire effectivement suivie par le véhicule, et
- une troisième étape (E3) de calcul d'un facteur de correction (F), la troisième étape (E3) comprenant une comparaison de la première trajectoire théorique avec la trajectoire effectivement suivie, le calcul du facteur de correction (F) comprenant une comparaison du lacet du véhicule suivant la première trajectoire théorique avec le lacet du véhicule mesuré lors de la deuxième étape (E2),
et une deuxième phase (P2) se déroulant alors que la trajectoire du véhicule est contrôlée de manière autonome, la deuxième phase (P2) comprenant :
- une quatrième étape (E4) de calcul d'une deuxième trajectoire théorique du véhicule, et
- une cinquième étape (E5) de calcul d'une trajectoire personnalisée du véhicule, ce calcul étant basé sur la deuxième trajectoire théorique et sur ledit facteur de correction (F).

2. Procédé de détermination selon la revendication précédente, **caractérisé en ce que** le calcul de la première trajectoire théorique et/ou de la deuxième trajectoire théorique et/ou de la trajectoire personnalisée comprend le calcul d'un angle de braquage de roues directrices du véhicule et/ou le calcul d'un lacet du véhicule, et/ou **en ce que** la mesure de la trajectoire effectivement suivie comprend la mesure d'un angle de braquage de roues directrices du véhicule et/ou la mesure d'un lacet du véhicule.

3. Procédé de détermination selon l'une des revendications précédentes, **caractérisé en ce que** le calcul de la deuxième trajectoire théorique comprend le calcul d'un lacet du véhicule, et **en ce que** la cinquième étape comprend une multiplication du lacet du véhicule lors de la deuxième trajectoire théorique par le facteur de correction (F).

4. Procédé de détermination selon l'une des revendications précédentes, **caractérisé en ce qu'**il comprend une sixième étape (E6) de contrôle de la trajectoire personnalisée du véhicule, la sixième étape comprenant :
- une première sous-étape (E61) de calcul d'une première trajectoire extrême du véhicule et, éventuellement d'une deuxième trajectoire extrême du véhicule, puis
- une deuxième sous-étape (E62) de comparaison de la trajectoire personnalisée du véhicule avec la première trajectoire extrême du véhicule et, éventuellement, avec la deuxième trajectoire extrême du véhicule.

5. Procédé de détermination selon l'une des revendications précédentes, **caractérisé en ce qu'**il comprend une huitième étape (E8) de calcul d'une commande de braquage des roues directrices du véhicule de sorte à ce que le véhicule suive la trajectoire personnalisée.

6. Procédé de fonctionnement d'un système de direction (3) pour un véhicule (1) autonome, **caractérisé en ce qu'**il comprend une étape (E7) de choix d'un mode de fonctionnement du véhicule parmi :
- un mode de fonctionnement (M2) dans lequel le véhicule est contrôlé de manière autonome en suivant une trajectoire théorique, ou
- un mode de fonctionnement (M3) dans lequel le véhicule est contrôlé de manière autonome en suivant une trajectoire personnalisée déterminée par le procédé de détermination selon l'une des revendications 1 à 5.

7. Système de direction (3) pour un véhicule (1) autonome, **caractérisé en ce qu'**il comprend des moyens matériels (7, 8, 9, 10, 11, 12, 13, 14, 15, 16) et/ou logiciels mettant en œuvre un procédé selon l'une des revendications précédentes, notamment des éléments matériels (7, 8, 9, 10, 11, 12, 13, 14 ,15, 16) et/ou logiciels conçus pour mettre en œuvre un procédé selon l'une des revendications précédentes.

8. Système de direction (3) selon la revendication précédente, **caractérisé en ce qu'**il comprend :
- un capteur de lacet (11), et/ou
- un capteur de braquage des roues directrices (12), et/ou
- un capteur de vitesse du véhicule (13), et/ou
- une caméra (14), et/ou
- un capteur GPS (15).

9. Véhicule automobile (1), **caractérisé en ce qu'**il comprend un système de direction selon l'une des revendications 7 ou 8.

10. Produit programme pour calculateur comprenant des instructions de code de programme enregistrées sur un support lisible par une unité de commande électronique (8) pour mettre en œuvre les étapes d'un procédé selon l'une quelconque des revendications 1 à 6 lorsque ledit programme fonctionne sur une unité de commande électronique (8).

11. Support d'enregistrement de données, lisible par une unité de commande électronique (8), sur lequel est enregistré un programme pour une unité de commande électronique (8) comprenant des instructions de code de programme de mise en œuvre d'un procédé selon l'une des revendications 1 à 6.

## Patentansprüche

1. Verfahren zur Bestimmung einer Trajektorie eines Fahrzeugs (1), das in der Lage ist, seine Trajektorie autonom zu steuern, wobei das Verfahren eine erste Phase (P1) umfasst, die abläuft, während die Trajektorie des Fahrzeugs von einem Fahrer manuell gesteuert wird, wobei die erste Phase (P1) umfasst:
- einen ersten Schritt (E1) des Berechnens einer ersten theoretischen Trajektorie des Fahrzeugs,
- einen zweiten Schritt (E2) des Messens einer von dem Fahrzeug tatsächlich gefahrenen Trajektorie, und
- einen dritten Schritt (E3) des Berechnens eines Korrekturfaktors (F), wobei der dritte Schritt (E3) ein Vergleichen der ersten theoretischen Trajektorie mit der tatsächlich gefahrenen Trajektorie umfasst, wobei das Berechnen des Korrekturfaktors (F) ein Vergleichen des Gierens des Fahrzeugs gemäß der ersten theoretischen Trajektorie mit dem bei dem zweiten Schritt (E2) gemessenen Gieren des Fahrzeugs umfasst,
und eine zweite Phase (P2), die abläuft, während die Trajektorie des Fahrzeugs autonom gesteuert wird, wobei die zweite Phase (P2) umfasst:
- einen vierten Schritt (E4) des Berechnens einer zweiten theoretischen Trajektorie des Fahrzeugs, und
- einen fünften Schritt (E5) des Berechnens einer personalisierten Trajektorie des Fahrzeugs, wobei diese Berechnung auf der zweiten theoretischen Trajektorie und auf dem Korrekturfaktor (F) basiert.

2. Verfahren zur Bestimmung nach dem vorhergehenden Anspruch, **dadurch gekennzeichnet, dass** die Berechnung der ersten theoretischen Trajektorie und/oder der zweiten theoretischen Trajektorie und/oder der personalisierten Trajektorie die Berechnung eines Einschlagwinkels von Lenkrädern des Fahrzeugs und/oder die Berechnung eines Gierens des Fahrzeugs umfasst und/oder dass das Messen der tatsächlich gefahrenen Trajektorie das Messen eines Einschlagwinkels von Lenkrädern des Fahrzeugs und/oder das Messen eines Gierens des Fahrzeugs umfasst.

3. Verfahren zur Bestimmung nach einem der vorhergehenden Ansprüche, **dadurch gekennzeichnet, dass** das Berechnen der zweiten theoretischen Trajektorie das Berechnen eines Gierens des Fahrzeug umfasst und dass der fünfte Schritt eine Multiplikation des Gierens des Fahrzeugs bei der zweiten theoretischen Trajektorie mit dem Korrekturfaktor (F) umfasst.

4. Verfahren zur Bestimmung nach einem der vorhergehenden Ansprüche, **dadurch gekennzeichnet, dass** es einen sechsten Schritt (E6) des Steuerns der personalisierten Trajektorie des Fahrzeugs umfasst, wobei der sechste Schritt umfasst:
- einen ersten Teilschritt (E61) des Berechnens einer ersten extremen Trajektorie des Fahrzeugs und gegebenenfalls einer zweiten extremen Trajektorie des Fahrzeugs, dann
- einen zweiten Teilschritt (E62) des Vergleichens der personalisierten Trajektorie des Fahrzeugs mit der ersten extremen Trajektorie des Fahrzeugs und gegebenenfalls mit der zweiten extremen Trajektorie des Fahrzeugs.

5. Verfahren zur Bestimmung nach einem der vorhergehenden Ansprüche, **dadurch gekennzeichnet, dass** es einen achten Schritt (E8) des Berechnens eines Befehls zum Einschlagen der Lenkräder des Fahrzeugs umfasst, so dass das Fahrzeug die personalisierte Trajektorie fährt.

6. Verfahren zum Betreiben eines Lenksystems (3) für ein autonomes Fahrzeug (1), **dadurch gekennzeichnet, dass** es einen Schritt des Auswählens (E7) einer Betriebsart des Fahrzeugs umfasst aus:
- einer Betriebsart (M2), in der das Fahrzeug autonom gesteuert wird, wobei es eine theoretische Trajektorie fährt, oder
- einer Betriebsart (M3), in der das Fahrzeug autonom gesteuert wird, wobei es eine personalisierte Trajektorie fährt, die durch das Verfahren zur Bestimmung nach einem der Ansprüche 1 bis 5 bestimmt wird.

7. Lenksystem (3) für ein autonomes Fahrzeug (1), **dadurch gekennzeichnet, dass** es Hardwaremittel (7, 8, 9, 10, 11, 12, 13, 14, 15, 16) und/oder Softwaremittel umfasst, die ein Verfahren nach einem der vorhergehenden Ansprüche implementieren, insbesondere Hardwaremittel (7, 8, 9, 10, 11, 12, 13, 14 ,15, 16) und/oder Softwaremittel, die dazu ausgelegt sind, ein Verfahren nach einem der vorhergehenden Ansprüche zu implementieren.

8. Lenksystem (3) nach dem vorhergehenden Anspruch, **dadurch gekennzeichnet, dass** es umfasst:
- einen Giersensor (11), und/oder
- einen Einschlagsensor der Lenkräder (12), und/oder
- einen Geschwindigkeitssensor des Fahrzeugs (13), und/oder
- eine Kamera (14), und/oder
- einen GPS-Sensor (15).

9. Kraftfahrzeug (1), **dadurch gekennzeichnet, dass** es ein Lenksystem nach einem der Ansprüche 7 oder 8 umfasst.

10. Programmprodukt für einen Rechner, das auf einem von einer elektronischen Steuereinheit (8) lesbaren Medium gespeicherte Programmcodeanweisungen umfasst, um die Schritte eines Verfahrens nach einem der Ansprüche 1 bis 6 zu implementieren, wenn das Programm auf einer elektronischen Steuereinheit (8) läuft.

11. Datenspeichermedium, das von einer elektronischen Steuereinheit (8) gelesen werden kann und auf dem ein Programm für eine elektronische Steuereinheit (8) gespeichert ist, das Programmcodeanweisungen zum Implementieren eines Verfahrens nach einem der Ansprüche 1 bis 6 umfasst.

## Claims

1. Method for determining a path of a vehicle (1) capable of controlling its path autonomously, the method comprising a first phase (P1) that takes place while the path of the vehicle is being controlled manually by a driver, the first phase (P1) comprising:
- a first step (E1) of computing a first theoretical path of the vehicle,
- a second step (E2) of measuring a path actually followed by the vehicle, and
- a third step (E3) of computing a correction factor (F), the third step (E3) comprising a comparison of the first theoretical path with the path actually followed, the computation of the correction factor (F) comprising comparing the yaw of the vehicle following the first theoretical path with the yaw of the vehicle measured in the second step (E2),
and a second phase (P2) that takes place while the path of the vehicle is being controlled autonomously, the second phase (P2) comprising:
- a fourth step (E4) of computing a second theoretical path of the vehicle, and
- a fifth step (E5) of computing a personalized path of the vehicle, this computation being based on the second theoretical path and on said correction factor (F) .

2. Determining method according to the preceding claim, **characterized in that** the computation of the first theoretical path and/or of the second theoretical path and/or of the personalized path comprises computing a steering angle of the steered wheels of the vehicle and/or computing a yaw of the vehicle, and/or **in that** the measurement of the path actually followed comprises measuring a steering angle of the steered wheels of the vehicle and/or measuring a yaw of the vehicle.

3. Determining method according to one of the preceding claims, **characterized in that** the computation of the second theoretical path comprises computing a yaw of the vehicle, and **in that** the fifth step comprises multiplying the yaw of the vehicle on the second theoretical path by the correction factor (F).

4. Determining method according to one of the preceding claims, **characterized in that** it comprises a sixth step (E6) of checking the personalized path of the vehicle, the sixth step comprising:
- a first sub-step (E61) of computing a first extreme path of the vehicle and, optionally, a second extreme path of the vehicle, then
- a second sub-step (E62) of comparing the personalized path of the vehicle with the first extreme path of the vehicle and, optionally, with the second extreme path of the vehicle.

5. Determining method according to one of the preceding claims, **characterized in that** it comprises an eighth step (E8) of computing a steering command for the steered wheels of the vehicle so that the vehicle follows the personalized path.

6. Method for operating a steering system (3) for an autonomous vehicle (1), **characterized in that** it comprises a step (E7) of choosing an operating mode of the vehicle from among:
- an operating mode (M2) in which the vehicle is controlled autonomously to follow a theoretical path, or
- an operating mode (M3) in which the vehicle is controlled autonomously to follow a personalized path determined by the determining method according to one of Claims 1 to 5.

7. Steering system (3) for an autonomous vehicle (1), **characterized in that** it comprises hardware means (7, 8, 9, 10, 11, 12, 13, 14, 15, 16) and/or software means that implement a method according to one of the preceding claims, and especially hardware elements (7, 8, 9, 10, 11, 12, 13, 14, 15, 16) and/or software elements designed to implement a method according to one of the preceding claims.

8. Steering system (3) according to the preceding claim, **characterized in that** it comprises:
- a yaw sensor (11), and/or
- a sensor (12) of the steering angle of the steered wheels, and/or
- a vehicle speed sensor (13), and/or
- a camera (14), and/or
- a GPS sensor (15).

9. Motor vehicle (1), **characterized in that** it comprises a steering system according to either of Claims 7 and 8.

10. Computer program product comprising program code instructions stored on a medium that is readable by an electronic control unit (8) with a view to implementing the steps of a method according to any one of Claims 1 to 6 when said program is run by an electronic control unit (8).

11. Data storage medium that is readable by an electronic control unit (8) and on which is stored a program for an electronic control unit (8) comprising program code instructions for implementing a method according one of Claims 1 to 6.
